# NEUE EUROPÄISCHE PATENTSCHRIFT

(11) **EP 2 643 717 B3**
(45) Veröffentlichungstag dieser Patentschrift: **08.07.2026**
(45) Hinweis auf die Patenterteilung: 26.01.2022
(21) Anmeldenummer: 11810779.6
(22) Anmeldetag: 17.11.2011
(51) Int. Cl.: G02B 6/00, F21V 8/00, G02B 6/42, G09F 9/305, G09F 9/33

(54) **FARBMISCHENDE SAMMELOPTIK**
COLOR-MIXING CONVERGENT OPTICAL SYSTEM
SYSTÈME OPTIQUE CONVERGENT MÉLANGEANT LES COULEURS

(30) Priorität: 23.11.2010 AT 19512010
(43) Veröffentlichungstag der Anmeldung: 02.10.2013
(73) Patentinhaber: Swarco Futurit Verkehrssignalsysteme Ges.m.b.H., 2380 Perchtoldsdorf (AT)
(72) Erfinder: SCHUCH, Michael, 7512 Kohfidisch (AT); ERNST, Wolfgang, 2331 Vösendorf (AT); OTTO, Alexander, 2102 Bisamberg (AT)
(74) Vertreter: Babeluk Patentanwälte GmbH
(86) Internationale Anmeldenummer: PCT/AT2011/000468
(87) Internationale Veröffentlichungsnummer: WO 2012/068603

(56) Entgegenhaltungen:
- EP-A1- 1 794 630
- EP-A2- 0 596 865
- WO-A1-2004/057384
- DE-A1- 102007 055 443
- DE-A1- 3 500 123
- GB-A- 649 063
- US-A1- 2007 024 971
- US-A1- 2008 080 207

## Beschreibung

Die Erfindung betrifft eine farb- und lichtmischende Sammeloptik - als vollfarbtaugliches Pixel für bildgebende Anzeigetafeln im Freien, für Spotlichter oder Signalisierung, bestehend aus einer LED-Lichtquelle, sowie einem davor angeordneten Lichtleiterstab und einer Sammellinse, gemäß dem Oberbegriff des Anspruchs 1 und der US 2007/0024971.

Diese Druckschrift schlägt eine derartige farb- und lichtmischende Sammeloptik vor, wobei das Mischen durch die spezielle Ausgestaltung des Querschnittes des Lichtleiterstabes mit Leisten und konkaven Einbuchtungen erreicht wird. In Ausgestaltungen sind auch TIR-Kollimatoren als Sammellinsen mit spezieller Anordnung vor dem Lichtleiterstab vorgesehen. Nachteilig ist besonders der hohe Aufwand für den komplexen Lichtleiterstab und die relativ große Längserstreckung.

Aus der EP 1 794 630, entsprechend der WO 2006/033029 ist ein Beleuchtungssystem bekannt, bei dem ein zylindrischer oder prismatischer Lichtleiter vor einer LED-Anordnung vorgesehen ist. In einer Ausgestaltung mit zylindrischem Lichtleiter ist ein "Collimator" vor dem Lichtleiter vorgesehen, der der Bündelung des Lichtes dient. Dargestellt ist ein Stumpf eines etwa parabolischen Korpus, über dessen Wirkungsweise nichts Näheres ausgeführt wird, eingezeichnete Strahlen durchqueren ihn schräg ohne Ablenkung.

Aus der US 2008/0080207, entsprechend der DE 102006 044 641 ist ein Scheinwerfer für ein KFZ bekannt, bei dem der Lichtleiter eine speziell geschwungene, somit nichtprismatische, 3D-Form aufweist, um das Strahlenbündel entsprechend den gesetzlichen Vorgaben in asymmetrischer Form auf die Straße zu lenken.

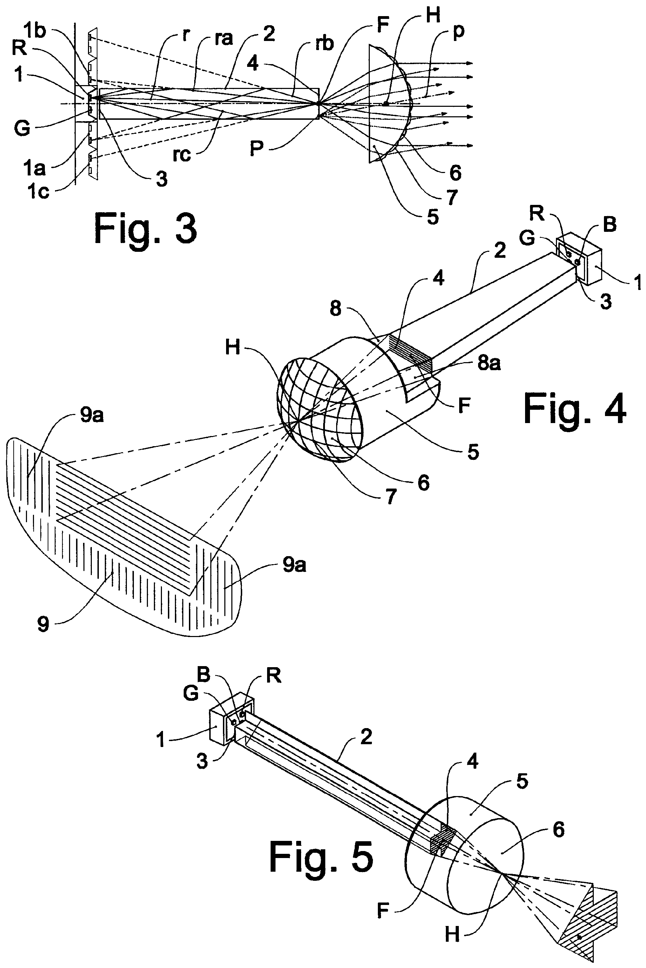

Auch die EP 596 865 offenbart eine Vorrichtung zum Abstrahlen von Licht, die ausschließlich für Scheinwerfer von Kraftfahrzeugen angewandt wird und dessen Lichtstrahl die automatische, optische, Abstandserkennung zum vorderen Fahrzeug verbessert ermöglichen soll. Ein zylindrischer Lichtleiter, gegebenenfalls mit einer Vielzahl einzelner Lichtfasern, ist wegen der Platzprobleme im KFZ posthornartig gekrümmt, um die erwünschte Länge zu erreichen. Er ist vor einer LED positioniert und eine "irradiating lens" am anderen Ende ist in Fig. 5 dargestellt.

Aus der US 2004/057384 ist eine Lichteinleitung von einem LED-Array in einen Lichtleiterstab über einen parabolischen Spiegel geoffenbart, ähnlich der Fig. 2 der eingangs genannten Druckschrift. Auch hier ist die Baulänge groß, über eine Farbmischung wird nichts ausgesagt.

Bisher wurden für Anzeigetafeln im Freien, welche variable Inhalte anzeigen müssen, wie etwa die sogenannten Wechselverkehrsanzeigen zur Verkehrsbeeinflussung, unter anderem Leuchtpunkte verwendet, welche eine Lichtquelle, insbesonders eine LED beinhalten. Durch elektronisches Ansteuern der LEDs können Leuchtpunkte ein- und ausgeschaltet werden, sowie auch graduelle Helligkeitsunterschiede darstellen. Diese Leuchtpunkte werden in unterschiedlichen Lichtfarben entweder nach darzustellenden Symbolen wie etwa Verkehrszeichen angeordnet, oder über größere Flächen in einer Rasteranordnung eingesetzt, um damit beliebig programmierbare Grafiken, Texte oder auch Bilder darstellen zu können. Hier fungieren die Leuchtpunkte als sogenannte Pixel.

Im Gegensatz zu Großflächen-Videoscreens auf LED-Basis, welche eine breite Lichtabstrahlung für ein davor befindliches Publikum benötigen, sind Verkehrsdarstellungen auf viel engere Abstrahl- oder Betrachtungswinkel begrenzt, da sie oft nur von einer Fahrspur aus großer Entfernung gesehen werden müssen. Außerdem zeigen sie in der Regel konstante Anzeigen und stehende Bilder, welche nur selten wechseln. Daraus resultieren erhebliche Vereinfachungen in der Ansteuerungselektronik und im Energieverbrauch, und damit weitaus geringere Anschaffungs- und Betriebskosten. Jedoch benötigen größere Sichtentfernungen und Wettereinflüsse auch höhere Lichtstärken, es sind auch bestimmte lichttechnische Anforderungen vorgeschrieben.

Während bisher einfarbige Leuchtpunkte zumeist ausreichend sind, und die wenigen Bilddarstellungen etwa aus einer Kombination von je einem roten, grünen und blauen Lichtpunkt, zusammengefasst als ein Farbpixel, in Rasteranordnung ausgeführt werden, ist in Zukunft zu erwarten, dass immer mehr Farbdarstellungen in immer höherer Auflösung gewünscht werden und eine Pixelanordnung aus drei einfarbigen Leuchtpunkten zu groß und zu teuer würde.

Im Vergleich dazu werden bei LED-Großbild-Videoschirmen speziell dafür gefertigte LED verwendet, welche die drei Grundfarben Rot, Grün und Blau in Form dreier LED-Kristalle in einem gemeinsamen Gehäuse enthalten, wobei jede Farbe individuell angesteuert werden kann. Die drei Farben weisen dabei eine identische Abstrahlcharakteristik auf, welche etwa durch Streumittelbeigabe in die LED erreicht wird. Diese sogenannten FullColor- oder Multi-LED weisen eine ebene Lichtaustrittsfläche auf und sind im Pixel-Raster angeordnet. Sie strahlen ihr Licht als sogenannte Kosinus-Strahler ab, wobei das Licht im Zentrum am stärksten ist und bis zum Rand bei 90° allmählich nach der Funktion einer Cosinuskurve auf Null absinkt. Weil das Licht halbkugelförmig in einen sehr großen Bereich abstrahlt, ist die Helligkeit auch im Zentrum eher gering und wegen des zunehmenden Energie- und Kühlaufwandes auch nicht steigerbar, weshalb solche Bildschirme nur im Innenbereich Verwendung finden. Im Außenbereich werden Großbild-Videoschirme ebenso mit speziellen, einzelnen roten, grünen und blauen LEDs mit integrierter, lichtbündelnder Linsenkuppe und ovaler Bauform und Lichtabstrahlung ausgeführt, weil die erforderliche Tageslicht-Helligkeit sonst nicht wirtschaftlich erreicht werden kann.

Bei allen LED-Großbildschirmen ist es besonders wichtig, die Lichtabstrahlung der LED möglichst identisch auszuführen, da ansonsten bei seitlicher Betrachtung Farbverschiebungen, Farbsäume oder Farbflecken erscheinen. Es ist sehr aufwändig, einzelne einfarbige LED mit Linsenkuppe so zu verbauen, dass sie alle präzise zueinander ausgerichtet sind, insbesonders wenn die LEDs noch auf Drahtfüßen stehen.

Die FullColor- oder Multi-LED werden als SMD-Bauform einfach im Raster auf eine geeignete Leiterplatte gelötet, wodurch auch eine genaue ebene Ausrichtung gegeben ist, die Lichtabstrahlung der drei LED-Kristalle ist bereits gleichartig.

Es liegt nun auf der Hand, die einfache und kostengünstige Bauform einer FullColor- oder MultiLED auch für hohe Lichtleistungen zu verwenden, indem das breit abstrahlende Licht einfach durch eine vorgesetzte Sammellinse gebündelt wird. Dieses Vorhaben scheitert jedoch daran, dass das Licht der drei Farbkristalle durch die vorgesetzte Linse nicht identisch zueinander gebündelt werden kann, sondern jede Farbe in eine andere Richtung zielt, entsprechend der Anordnung der Kristalle in der LED und den optischen Gesetzmäßigkeiten der Bildgebung. Die Farben müssen daher vor einer Bündelung gut vermischt werden.

Es gibt bereits Vorschläge zur Farbvermischung unterschiedlicher LED. In der JP 2008 047482 A (Epson) wird eine Displaybeleuchtung durch Kanteneinstrahlung mit unterschiedlich farbigen LED, Polarisationsfilter und Farbvermischung vorgestellt. Hier ist die Aufgabenstellung grundsätzlich eine andere, die Farbmischung ohne Bündelung des Lichts entsteht ja bereits in den Multi-LED selbst.

Auch in den bekannten Werbetafeln mit Kanteneinstrahlung durch LED in unterschiedlichen Farben entsteht automatisch eine sehr gute Farbvermischung ohne Bündelung, indem das Licht jeder LED über die ganze Anzeigefläche durch Mehrfachreflexion und Streuung verteilt wird.

Auch Raumleuchten mit roten, grünen und blauen LED erzeugen ein gleichmäßig ausgemischtes Weiß, sofern sie LED mit gleicher Abstrahlcharakteristik verwenden und durch zusätzliche Streuung mit strukturierten Abdeckscheiben weiter vergleichmäßigen, sodass eine einheitliche Lichtwirkung und Farbe entsteht.

Eine Farbmischung ohne Lichtbündelung kann somit einfach durch Lichtstreuung erfolgen. Es seien auch Statusanzeigen an elektronischen Geräten erwähnt, wo LED mit mehreren Kristallen verwendet werden, welche etwa Rot und Grün und als Mischfarbe Gelb aufweisen.

Das Licht dieser LED wird mittels Lichtleiter zur Gehäuseoberfläche geleitet und dort breitstreuend abgestrahlt. Streuung bedeutet grundsätzlich auch einen Energieverlust des Lichtes, der sich in verringerter Bündelungsfähigkeit äußert, sowie Verluste durch Licht, welches durch Streuung das optische System vorzeitig verlässt und nicht genutzt werden kann.

Es ist aber auch schon eine Anordnung für gebündeltes Mischlicht bekannt. In der US 2010 020565 A1 (Seward) wird vorgeschlagen, das unterschiedlich gefärbte Licht der LEDs in einer kleinen (Ulbricht'schen) Kugel vollständig zu vermischen und durch einen Lichtleiterstab in eine hochbündelnde Sammeloptik zu leiten. In der Praxis scheitert der Vorschlag an den hohen Streulichtverlusten an den Wänden der Kugel, sowie der erforderlichen Baugröße und dem Aufwand für diese Anordnung.

Grundsätzlich ist eine Lichtübertragung mittels Lichtleiter, an dessen einem Ende eine Lichtquelle einstrahlt und an dessen anderem Ende das abstrahlende Licht durch eine Optik verteilt wird, schon lange bekannt. Dieses Basissystem kann jedoch durch eine enorme Vielzahl von Parametern abgewandelt werden, sodass eine unübersehbare Vielfalt an Eigenschaften und Gestaltungsmöglichkeiten entsteht.

Betrachtet man die Eigenschaften eines Lichtleiters, so wird neben vielen anderen Eigenschaften im Allgemeinen angenommen, dass dieser Lichtleiter das Licht "per se" vermischt und daher grundsätzlich als Lichtfarb- oder Intensitätsmischerfungiert, wie etwa eine raue Oberfläche oder ein transluzentes, diffuses Material, wie beispielsweise Milchglas. Tatsächlich ist ein Lichtleiter ein hochtransparentes, durchaus präzises Optikelement, das sich in seiner Funktion durch nichts von einer optischen Linse, einem optischen Prisma oder anderen optischen Objekten unterscheidet. Es findet in seinem Inneren ein genau bestimmbarer Strahlengang statt, der nur von der Art der Lichtquelle und deren Einwirkung auf die Eintrittsfläche abhängt.

Der Eindruck einer "vermischenden" Eigenschaft entsteht dadurch, dass das Licht durch vielfache Totalreflexion an den Lichtleiterwänden weitergeleitet wird und daher Oberflächentoleranzen einen sehr hohen Einfluss auf das Ergebnis haben, denn selbst kleinste Winkelfehler der Wandflächen werden bei der Totalreflexion verdoppelt, und die "Serienschaltung" der zahlreichen Reflexionen führt zu weiteren Toleranzen der Lichtablenkung. Daher weisen lange Lichtleiter in der Tat eine durch unvermeidliche Fertigungstoleranzen entstehende, vermischende Wirkung auf. Jedoch weisen kurze, sehr präzise gefertigte Lichtleiter keinerlei Mischwirkung auf, wodurch sie auf das Licht wie optische Linsen oder Prismen wirken.

Ein anderes Kriterium ist die Effizienz des Systems Lichtquelle-Lichtleiter-Verteilung. Wird so gut wie jeder Lichtstrahl der Lichtquelle durch den Lichtleiter geführt und nutzbringend abgestrahlt, so ist die Effizienz nahezu 100%. Praktisch treten nicht alle Lichtstrahlen in den Lichtleiter, sie verfehlen die Eintrittsfläche oder werden daran zurück reflektiert. Die Materialien und Oberflächen absorbieren auch einen Teil des Lichts, und bei der Verteilung werden auch viele Lichtstrahlen in nicht notwendige Bereiche strahlen. Insbesonders weisen Faserbündellichtleiter sogenannte "Zwickelverluste" zwischen den runden Fasern auf, wobei Licht zwar hinstrahlt, aber nicht weitergeleitet wird. Ebenso ist auch die Mantelschicht einer Faser aus niedrig brechendem Material nicht in der Lage Licht weiter zu leiten.

Ein weiteres Kriterium ist die optische Wirkung eines Lichtleiters. Erweitert sich der Lichtleiter, so wird das Licht gebündelt, da bei jeder Reflexion an der Wand der Achswinkel jedes Lichtstrahles verringert wird. Verengt er sich jedoch, wird das Licht gestreut, wobei sehr rasch die "Apertur" des Lichtleiters überschritten wird. Das Licht trifft dann unter immer steiler werdenden Winkeln auf die Reflexionswände, bis es seitlich aus dem Lichtleiter austreten kann und verloren geht.

Die EP 0 596 865 A2 offenbart eine Vorrichtung zum Ausstrahlen von Licht, wobei ein Optikelement und als Lichtquelle eine LED verwendet werden. Dabei ist zu beachten, dass zur Übertragung des Lichts Glasfaserleitungen verwendet werden, welche auch nahezu beliebige Biegungen aufweisen können. Durch selektives Einschalten verschiedener LEDs wird der Abstrahlwinkel des Gesamtlichtstrahles beeinflusst. Desweiteren weisen diese Glasfaserleitungen, bevorzugt Faserbündel, für sich betrachtet jeweils einen kreisförmigen Querschnitt auf.

Die US 2009/0052189 A1 offenbart eine Anordnung zur Herstellung eines Spotlights mit hoher Bündelung und gleichzeitiger Ausmischung der Grundfarben (R, G, B). Dieser LED-Strahler umfasst eine LED Lichtquelle mit mehreren LED Kristallen, eine Stablinse mit der Funktion eines Lichtleiterstabs und ein optisches Element. Dahingehend offenbart die US 2009/0052189 A1 eine bekannte Basisanordnung, ergänzt durch eine "erste" Bündelungsoptik, welche das von der LED-Lichtquelle abgestrahlte Licht auf die Eintrittsfläche eines quadratischen Lichtleiterstabes bündelt, welcher sich konisch verjüngt und dessen Austrittsfläche im Fokus eines Reflektors liegt. Dabei ist die primäre Sammellinse vor dem Lichtleiterstab angeordnet und das Licht der LED wird auf dessen Eintrittsfläche gebündelt, darüberhinaus weist die Stablinse von der LED-Lichtquelle zur Linse eine sich verjüngende Querschnittsform auf. Somit wird in der US 2009/0052189 A1 hauptsächlich ein Reflektor verwendet, da der sich konisch verjüngende Lichtleiterstab das Licht in eine Hemisphäre abstrahlt, welche durch einen Reflektor leichter zu bündeln ist. Hingegen wird beim zweiten in der US 2009/0052189 A1 vorgestellten Sammelsystem mittels dichroitischer Spiegel das Licht bereits vorgemischt. Diese wesentlichen Unterschiede begründen sich in dem Ziel der US 2009/0052189 A1, eine maximale Bündelung zu erzielen, während mit der vorliegenden Erfindung eine bestimmte Lichtverteilung erzielt werden soll.

Hingegen offenbart die WO 2006/054199 A1 eine Lichtquelle, welche eine Lichtmaschine mit zumindest einer LED und / oder zumindest einem Laserlicht emittierenden Element, zur Generierung und Einkopplung von Licht, in zumindest einem Lichtleiter, welcher zumindest ein Auskopplungselement zur Auskopplung des Lichts, umfasst.

Aufgabe der Erfindung ist es, eine Optik zu bauen, welche das Licht der unterschiedlichen LED-Kristalle einer solchen FullColor- oder Multi-LED untereinander vollständig so vermischt, dass seine Intensität und Richtung auf kleinem Raum erhalten bleibt und anschließend in bekannter Weise gebündelt werden kann, ohne für den Betrachter Farbunterschiede, Farbsäume oder Farbflecken auszubilden, wobei die Anordnung kostengünstig und klein sein muss.

Das erfolgt in erfindungsgemäßer Weise dadurch, dass die LED-Lichtquelle mehrere LED-Kristalle enthält, wobei die Lichteintrittsfläche des Lichtleiterstabes vor der Lichtaustrittsfläche der Lichtquelle angeordnet ist und Licht jedes Kristalls einfängt, der Lichtleiterstab sich senkrecht zu seiner Eintrittsfläche erstreckt, sein Querschnitt konstant ist oder allmählich zunimmt und der Lichtaustritt des Lichtleiterstabes sich im Bereich des Fokus der vorgesetzten Sammellinse befindet. Zur Formulierung "im Bereich des Fokus" wird bemerkt, dass technisch gesehen die Lichtaustrittsfläche möglichst mit dem Fokus zusammenfällt bzw. im den Fokus unmittelbar umgebenden Bereich liegt. Weiters beträgt erfindungsgemäß die Länge des Lichtleiterstabes ein Vielfaches des Durchmessers der Eintrittsfläche.

Die vorliegende Erfindung geht von der Verwendung einer handelsüblichen RGB-LED mit Kristallen in den drei Grundfarben Rot, Grün, Blau (R, G, B) zur Erzeugung von Licht mit beliebiger Farbmischung aus. Während die LED selbst die Ansprüche einer Farbmischung erfüllt, indem sie das Licht jedes Kristalls als sogenannter Kosinusleichter zu bündeln ist. Hingegen wird beim zweiten in der US 2009/0052189 A1 vorgestellten Sammelsystem mittels dichroitischer Spiegel das Licht bereits vorgemischt. Diese wesentlichen Unterschiede begründen sich in dem Ziel der US 2009/0052189 A1, eine maximale Bündelung zu erzielen, während mit der vorliegenden Erfindung eine bestimmte Lichtverteilung erzielt werden soll.

Hingegen offenbart die WO 2006/054199 A1 eine Lichtquelle, welche eine Lichtmaschine mit zumindest einer LED und / oder zumindest einem Laserlicht emittierenden Element, zur Generierung und Einkopplung von Licht, in zumindest einem Lichtleiter, welcher zumindest ein Auskopplungselement zur Auskopplung des Lichts, umfasst.

Aufgabe der Erfindung ist es, eine Optik zu bauen, welche das Licht der unterschiedlichen LED-Kristalle einer solchen FullColor- oder Multi-LED untereinander vollständig so vermischt, dass seine Intensität und Richtung auf kleinem Raum erhalten bleibt und anschließend in bekannter Weise gebündelt werden kann, ohne für den Betrachter Farbunterschiede, Farbsäume oder Farbflecken auszubilden, wobei die Anordnung kostengünstig und klein sein muss.

Das erfolgt in erfindungsgemäßer Weise durch das im kennzeichnenden Teil des Anspruches 1 angegebene Merkmal. Zur Formulierung "im Bereich des Fokus" im Oberbegriff wird bemerkt, dass, technisch gesehen, die Lichtaustrittsfläche möglichst mit dem Fokus zusammenfällt bzw. im den Fokus unmittelbar umgebenden Bereich liegt.

Die vorliegende Erfindung geht von der Verwendung einer handelsüblichen RGB-LED mit Kristallen in den drei Grundfarben Rot, Grün, Blau (R, G, B) zur Erzeugung von Licht mit beliebiger Farbmischung aus. Während die LED selbst die Ansprüche einer Farbmischung erfüllt, indem sie das Licht jedes Kristalls als sogenannter Kosinusbekannter Weise durch mehrfache verlustlose Totalreflexion an den Wandungen des Lichtleiterstabes bis zu dessen Lichtaustritt, welcher durchaus gleich groß sein kann wie die Eintrittsfläche, und wird dabei durch die geometrische Gestaltung des Lichtleiterstabes vermischt. Ohne weitere Maßnahmen würde das Licht beim Austritt wieder auf +/-90° aufgefächert. Der Lichtaustritt kann daher wie die LED-Austrittsfläche, jedoch mit durchmischtem Licht angesehen und mittels einer Sammellinse in bekannter Weise gebündelt werden. Die Durchmischung erfolgt damit im Wesentlichen ohne Lichtverluste.

Die Durchmischung ist eine Folge der Mantelgestaltung und Länge des Lichtleiterstabes. Wegen der Vielzahl möglicher Querschnitte beschränkt sich die Schilderung der Wirkungsweise auf wenige einfache Annahmen, was aber keine Einschränkung des Schutzumfanges darstellt.

Grundsätzlich vermischt jeder Lichtleiter das eintretende Licht nach Zurücklegung eines bestimmten Weges gleichmäßig über den Lichtaustritt. Ursache sind neben der geometrischen Gestaltung vor allem kleine geometrische Abweichungen der Oberflächen, Oberflächenrauhigkeit, Einschlüsse im Material oder eine Krümmung des Lichtleiterstabes, welche die Reflexionswinkel beeinflussen und damit zur Vermischung des Lichts beitragen. Diese Streuungen sorgen aber auch für Verluste, wenn die Reflexionswinkel so weit verändert werden, dass Licht nicht mehr total reflektiert wird und durch seitlichen Austritt verloren geht. Und je länger der Lichtleiter ist, umso mehr Licht geht auch durch Absorption im Material verloren.

Bei der erfindungsgemäßen Anwendung ist die Länge des Lichtleiterstabes zweckmäßigerweise so kurz wie erforderlich gehalten. Die Vermischung wird allein durch die Lichtleitergeometrie bewerkstelligt, Abweichungen der Geometrie oder des Materials zur Verbesserung der Mischung durch Streuwirkung verringern die Effizienz und sind hier weder wünschenswert noch notwendig. Der Lichtleiterstab verteilt darüber hinaus das Licht jedes Kristalls innerhalb der gleichen Lichtleiterlänge gleichmäßig über den Lichtaustritt, unabhängig davon, ob ein Kristall mittig oder im Randbereich der Eintrittsfläche positioniert ist.

Die Erfindung wird nun anhand der Zeichnung erläutert. Es zeigen Fig. 1 und Fig. 2 Draufsichten auf unterschiedliche Raster von Spiegelbildern der Lichtquelle, Fig. 3 einen Schnitt durch eine erfindungsgemäße Anordnung samt Strahlengang, Fig. 4 und 5 erfindungsgemäße Optiken in anschaulicher Darstellung.

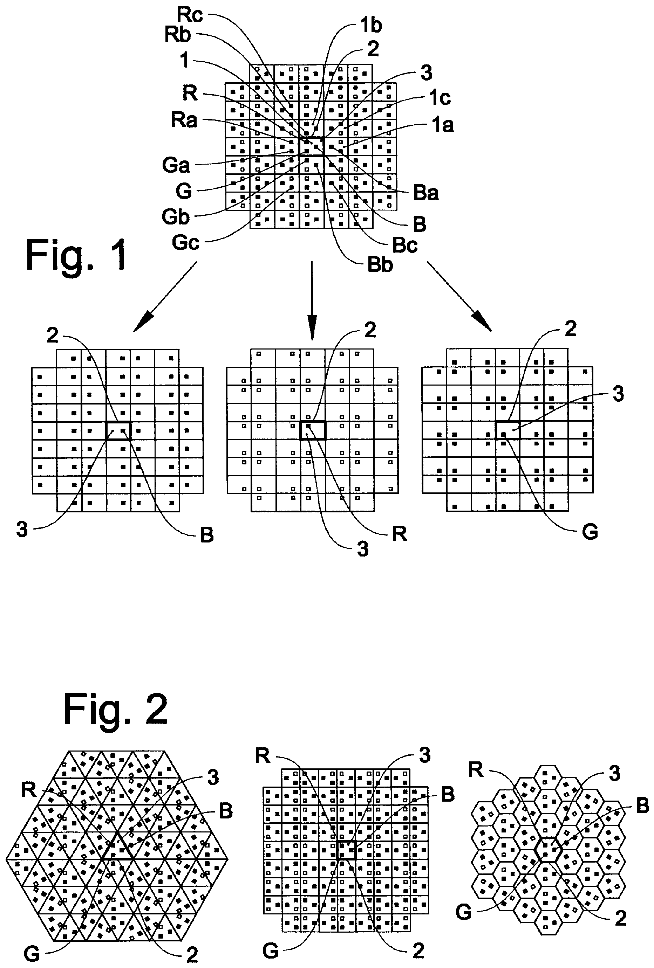

Nimmt man zunächst einen Lichtleiterstab mit konstantem, rechteckigem Querschnitt vor einer Lichtquelle mit etwa gleich großem Lichtaustritt an, wie auch in Fig. 3 dargestellt, so kann man dessen Wirkung anhand Fig. 1 wie folgt beschreiben:
Blickt man gedanklich von unmittelbar innerhalb des Lichtaustritts 4 des Lichtleiterstabes 2 gegen die Lichtquelle 1, so erscheint der Lichtleiterstab 2 wegen der Totalreflexion an den Seiten als eine rechteckige Röhre aus ebenen Spiegeln. Die durch die Lichteintrittsfläche 3 sichtbare Lichtquelle 1 spiegelt sich nicht nur an allen vier Seitenwänden, sondern es entsteht durch Mehrfachspiegelung der parallel gegenüberliegenden Spiegelflächen ein rechteckiges Muster von Spiegelbildern 1a, 1b, 1c ... derselben Lichtquelle 1. Es handelt sich hier um einen Effekt vergleichbar mit einem Blick in ein sogenanntes Kaleidoskop. Die Lichtquelle 1 weist hier drei Kristalle, R, G, B unterschiedlicher Farbe, insbesonders Rot, Grün und Blau auf, deren Spiegelbilder Ra, Rb, Rc,... Ga, Gb, Gc ... Ba, Bb, Bc ... sind ebenfalls eingezeichnet. Ist der Lichtleiterstab 2 scharfkantig ausgeführt, so ist der Blick auf alle Spiegelbilder ungehindert möglich. Im Fall größerer Kantenradien würden manche Spiegelbilder durch den Radius abgedeckt, bzw. käme es zu Reflexionen an den Radien selbst, wodurch die Darstellung beeinträchtigt würde.

Befindet sich der LED-Kristall R, G, B nicht in der Mitte der Eintrittsfläche 3, so liegen manche Spiegelbilder enger zusammen, andere weiter auseinander, wobei sich im Mittel aber nichts wesentliches ändert, denn jedes Spiegelbild verbleibt natürlich innerhalb seiner mitgespiegelten rechteckigen Eintrittsfläche. Das Feld der Spiegelbilder ist begrenzt durch den materialabhängigen Grenzwinkel der Totalreflexion, mit etwa 42° für Plexiglas, weiter außen angenommene LED-Spiegelbilder können kein Licht mehr zum Lichtaustritt strahlen und sind deswegen nicht existent. Je länger der Lichtleiterstab 2, umso weiter weg ist der Betrachter, umso größer das sichtbare Feld von Spiegelbildern, umso geringer sind die Blickwinkelunterschiede zwischen den Spiegelbildern und umso größer die Gleichmäßigkeit insgesamt. Die Einschränkung der Sichtbarkeit durch den Grenzwinkel der Totalreflexion erfordert daher eine solche Länge des Lichtleiterstabes 2, dass für die gewünschte Gleichmäßigkeit der Vermischung ausreichend viele Spiegelbilder im Sichtfeld liegen. Die zeichnerische Darstellung kann hierbei als Anhaltspunkt dienen, es sind in einer Richtung 7, in der anderen Richtung 9 Spiegelbilder samt Original zu erkennen. Unter Einbeziehung des Grenzwinkels von etwa 42° kann man davon ausgehen, dass ein Lichtleiterstab 2, der 8- bis 10 Mal länger wie seine Eintrittsfläche 3 groß ist, sehr gute Ausmischungsergebnisse liefert. Das sind bei Verwendung handelsüblicher FullColor-LED für Großbild-Videoanzeigen nur etwa 20 mm Lichtleiterstablänge.

Jedes Spiegelbild strahlt wie auch das Original ein volles Bündel an Lichtstrahlen innerhalb des Winkelbereiches bis etwa 42° aus, daher auch zu jedem Punkt des Lichtaustritts. Die Lichtbündel unterscheiden sich nur hinsichtlich der Intensität und oft auch ihrer Farbe in Abhängigkeit von ihrer Abstrahlrichtung. Bei Vorliegen von genügend vielen Spiegelbildern entsteht somit eine außerordentlich gleichmäßige Ausleuchtung des Lichtaustritts durch die Summe der Lichtstrahlenbündel jeder Farbe und aus jeder Richtung eines Spiegelbildes und der richtungsabhängigen Helligkeit der LED-Kristalle. Selbst die Positionsunterschiede der LED-Kristalle innerhalb der Lichtquelle gleichen sich aus, da ein Spiegelbild im Mittel näher, das nächste dafür weiter entfernt ist, was sich in der Gesamtwirkung fast völlig aufhebt. Über eine größere Länge des Lichtleiterstabes kann die Qualität der Vermischung wegen der Zunahme der Anzahl von Spiegelbildern weiter verbessert werden.

Fig. 1 zeigt auch, dass nicht nur die Gesamtansicht der Spiegelbilder den Eindruck einer gleichmäßigen Verteilung erweckt, sondern auch jede Farbe für sich relativ gleichmäßig und regelmäßig innerhalb der Gesamtansicht verteilt ist, wie die drei Ansichten getrennt nach R, G und B verdeutlichen. Unmittelbar vor Austritt des Lichts aus dem Lichtleiterstab 2 herrscht daher eine gleichmäßig helle Verteilung des Lichts in Mischfarbe, innerhalb des Grenzwinkels von etwa 42° vor.

Der Blick von innerhalb des Lichtaustritts 4 auf das Feld der Spiegelbilder ist tatsächlich die Summe der Blicke in sämtlichen möglichen Richtungen auf ein und dieselbe Lichtquelle 1, wodurch sich ein mittlerer Gesamteindruck von Farbe und Helligkeit einstellt, was einer physischen Vermischung aller Lichtstrahlen etwa durch Zerstreuung durchaus ebenbürtig ist.

Alle Lichtstrahlen, die in den Lichtleiterstab eingetreten sind, treten wieder aus dem gleich großen Lichtaustritt im selben Winkel aus. Damit erfolgt die Farb- und Helligkeitsmischung abgesehen von den physikalisch unvermeidlichen Grenzflächensowie Lichtleitungsverlusten im Material ohne Verluste, die Effizienz einer nachfolgenden Bündelung ist daher im Wesentlichen unverändert hoch.

Es ist naheliegend, dass solche Felder an Spiegelbildern mit geometrischen Formen des Lichtleiterstabes entstehen, welche eine Ebene lückenlos und gleichmäßig füllen können, also gleichseitiges Dreieck, Rechteck und Quadrat, sowie regelmäßiges Sechseck, wie in Fig. 2 dargestellt. Diese Lichtleiterstab-Querschnitte erzeugen jeweils eine lücken- und überlappungslose Fläche von Spiegelbildern mit regelmäßiger Rasteranordnung, sofern die Spiegelflächen auch scharfkantig aneinandergrenzen. Die Durchmischung der Farben und Helligkeiten entsteht dabei wie zuvor geschildert weder durch Mischvorgänge noch durch Streuwirkung, sondern durch eine virtuelle regelmäßige Anordnung baugleicher Lichtquellen als Spiegelbilder ein und derselben Lichtquelle, welche ihr Licht zum Lichtaustritt senden. Die Fokussierbarkeit bleibt ebenfalls im vollen Umfang erhalten, weil der Ein- und Austrittsquerschnitt des Lichtleiterstabes gleich groß sein kann. Und weil sich die Kristallposition in ihrer Auswirkung im Mittel weitgehend ausgleicht, ist auch die Abhängigkeit des Mischungsergebnisses davon äußerst gering.

Die gleichmäßige Durchmischung allein ist nicht das einzige Kriterium für die optische Gestaltung, denn es muss auch die Abstrahlungsrichtung der Lichtstrahlen nach dem Lichtaustritt berücksichtigt werden. Im Fall einer regelmäßigen Anordnung von diskreten Spiegelbildern der LED-Kristalle treten auch die Lichtstrahlen in den zugehörigen diskreten Richtungen aus, im Gegensatz zum Austritt aus der Lichtquelle stellen sie somit kein homogen divergierendes Lichtbündel mehr dar. Ohne vorgesetzte Optik würde das abgestrahlte Licht ein Muster aus hellen Lichtpunkten erzeugen, denn jedes Spiegelbild der LED erzeugt sein eigenes Lichtbündel durch den Lichtaustritt in der jeweiligen Ausstrahlungsrichtung. Dieser Effekt ist eine Folge der vorliegenden Vermischungsmethode. Im Fall einer echten Durchmischung aller Lichtstrahlen wäre das Lichtbündel genauso homogen wie auch beim Austritt aus der Lichtquelle selbst.

Fig. 3 zeigt diesen Umstand in vereinfachter Form für das Licht eines LED-Kristalles R, indem aus Gründen der Übersichtlichkeit nur Achslichtstrahlen r, ra, rb, rc ... dargestellt sind, jeweils stellvertretend für ein enges Lichtstrahlenbündel. Das durch den Lichtaustritt 4 abgestrahlte Licht der Spiegelbilder bildet eine Garbe von engen Einzelbündeln. Das ist für den Mittelpunkt F des Lichtaustritts dargestellt, sowie für einen beliebig seitlich liegenden Punkt P des Lichtaustritts, für den sich die Abstrahlungsrichtung der engen Lichtbündel nur geringfügig ändert.

Wird nach dem Lichtleiterstab 2 eine Sammellinse 5 so positioniert, dass sich der Lichtaustritt 4 genau in ihrem Fokus F befindet, so werden die in jedem Punkt P des Lichtaustritts 4 vorhandenen divergierenden Lichtstrahlenbündel durch die Sammellinse in die diesem Punkt P entsprechende Richtung p durch den sogenannten Hauptpunkt H der Sammellinse 5 gebündelt. Die durch den Mittelpunkt des Lichtaustritts F gehenden Lichtstrahlbündel werden achsparallel ausgerichtet, Die Bündel der seitlich davon liegenden Punkte des Lichtaustritts werden in die zugehörigen Richtungen p parallelgerichtet. Der Lichtaustritt 4 wird also nach den optischen Gesetzen ins Unendliche projiziert, wobei jeder Punkt P des Lichtaustritts 4 sich in eine nach den optischen Gesetzen bestimmte Richtung p abbildet, unabhängig davon, welche Richtung die aus diesem Punkt austretenden einzelnen Lichtstrahlen haben. Die Lichtverteilung dieser optischen Anordnung ist somit ein gleichmäßig heller, gleichfarbiger, auf den Kopf gestellter Bereich in der Gestalt des Lichtaustritts 4.

Diese Lichtverteilung kann durch optisch wirksame Geometrien oder Streu-Strukturen im Bereich der Sammellinse 5 weiter an die Anforderungen angepasst werden. Es liegt auf der Hand, dass der Lichtaustritt bereits eine für die gewünschte weitere Lichtverteilung und Streuung günstige Gestalt haben soll. Beispielsweise kann die Verteilung durch Rippen oder Noppen 7 auf der Austrittsfläche 6 der Sammellinse 5 in die Breite gestreut werden. Die vorerst gleichmäßige Helligkeit wird damit hinsichtlich einer wunschgemäßen Helligkeitsverteilung abgewandelt und verbreitert, ohne Beeinträchtigung der Mischfarbe.

In weiterer Ausgestaltung der Erfindung kann der Lichtleiterstab 2 sich auch konisch erweitern. Wie bekannt, wird hierdurch das Licht im Lichtleiterstab gebündelt, indem die Schräge jedes Lichtstrahles zur Achse bei jeder Totalreflexion an der Wand um den zweifachen Wert des dort vorherrschenden Konuswinkels reduziert wird. Im Fall eines rechteckigen Querschnitts kann eine Bündelung in horizontaler, vertikaler oder allseitiger Richtung erfolgen. Der Lichtaustritt 4 vergrößert sich damit entsprechend gegenüber der Eintrittsfläche 3. Blickt man durch ihn in den Lichtleiterstab 2 hinein, so krümmt sich die rasterartige Anordnung der Spiegelbilder in einer oder beiden Richtungen vom Betrachterweg. Die Reduktion der Lichtstrahlwinkel führt dabei zu einer Reduktion der Anzahl der wirksamen Spiegelbilder, was mit einer adäquaten Verlängerung des Lichtleiterstabes 2 ausgeglichen werden kann. Die Vermischung selbst funktioniert aber genauso wie zuvor. Die Vergrößerung des Lichtaustritts 4 hat eine aliquote Reduktion der Leuchtdichte, dafür eine höhere Ausgangsbündelung des Lichts zur Folge.

Die skizzierten Ausführungen von Lichtleiterstab-Querschnitten weisen das gleiche Funktionsprinzip auf. Es können aber auch beliebig andere Querschnitte verwendet werden, auch mit krummen Begrenzungsflächen. Die einzelnen Spiegelbilder wandeln sich dann zu verzerrten Figuren, oft nicht mehr als Spiegelbilder erkennbar, die Mischung kann nur mehr als Integral über differenzielle Spiegelbilder gesehen werden, es kommt zu Überlappungen oder Lücken bei den Spiegelbildern. Die Vermischung ist daher zumeist deutlich schlechter und in der Funktionsweise völlig unübersichtlich. Die notwendige Länge eines solchen Lichtleiterstabes ist dann nur mehr mittels Simulation oder Versuch bestimmbar.

Eine sehr schlechte Durchmischung weist dabei ein kreisförmiger Querschnitt auf, da ein Lichtstrahl, der durch das Zentrum geht, nach jeder Reflexion wieder nur durch das Zentrum läuft und ein Lichtstrahl, der am Zentrum vorbeigeht, immer nur im Kreis herum reflektiert wird. Eine Verbesserung ist dann auf die zusätzliche Streuwirkung durch Toleranzen der Geometrie, Oberflächenrauhigkeit, Unstetigkeiten im Material oder eine Krümmung des Lichtleiterstabes angewiesen. Es empfiehlt sich daher, wo immer möglich, Polygone mit erfindungsgemäßem Querschnitt zu wählen, um nicht auf die verlustbehafteten Streuwirkungen angewiesen zu sein. Bei derartigen und anderen, nicht kreisförmigen Querschnitten ist als Radius der Äquivalenzradius zu setzen. Dieser Äquivalenzradius ist der Radius, den ein Kreis mit gleicher Querschnittfläche wie der betrachtete Querschnitt, aufweist.

In weiterer Ausgestaltung der Erfindung kann der Lichtaustritt 4 nur virtuell vorhanden sein, die Sammellinse 5 schließt unmittelbar und einstückig an den Lichtleiterstab 2 an. So muss das Licht nicht aus dem Lichtleiter aus- und wieder in die Sammellinse eintreten, sondern kann ohne Grenzflächenverluste weiterlaufen, bis es aus der Sammellinse austritt. Diese Bauweise ist sehr kompakt und effizient.

Eine weitere Ausgestaltung betrifft die Verwendung von optisch wirksamen Geometrien im Bereich der Sammellinse. Ist etwa die Austrittsfläche der Sammellinse mit einer Struktur überlagert, so wird das Lichtbild durch diese Struktur modifiziert bzw. gestreut. Man kann aber auch zwischen virtuellem Lichtaustritt und Austrittsfläche der Sammellinse etwa mittels totalreflektierender Flächen einen Teil des Lichts in andere, ansonsten dunkel bleibende Zonen lenken. Die Geometrie des Lichtleiterquerschnitts so zu wählen, dass zusammen mit einfachen lichtlenkenden Maßnahmen genau die gewünschte Lichtverteilung erzielt wird, ist insbesonders mittels Computersimulation lösbar.

Fig. 4 zeigt eine Optik mit den angeführten Ausgestaltungen vor einer FullColor-LED-Lichtquelle 1. Der Lichtleiterstab 2 erweitert sich konisch in horizontaler Richtung, vertikal ist er konstant gehalten. Die Lage des Lichtaustritts 4 wird bestimmt durch das untere und obere Ende des Lichtleiterstabes 2. Der Lichtaustritt 4 ist nur virtuell vorhanden, denn das Material erstreckt sich weiter bis zur Austrittskuppe 6 der Sammellinse 5, deren Fokus im virtuellen Lichtaustritt 4 liegt. Anschließend an den Lichtleiterstab 2 ist an der Oberseite eine geneigte Fläche 8 angesetzt, welche ein Spiegelbild des virtuellen Lichtaustritts unmittelbar oberhalb angrenzend erzeugt, ebenso werden die Seitenflächen 8a des Lichtleiterstabes weitergeführt, wobei auch sie ein angrenzendes Spiegelbild des virtuellen Lichtaustritts erzeugen. Die Projektion des Lichtaustritts 4 über die Sammellinse 5 ins Unendliche kehrt die Richtungen um, sie weist daher seitlich und unterhalb des projizierten Rechtecks noch weiterführende Lichtflächen 9, 9a auf, welche durch Spiegelung des Austritts an den Flächen 8 und 8a entstehen, weshalb hier in Summe eine im Wesentlichen dreieckige Lichtverteilung entsteht. Die gespiegelten Flächen 9, 9a sind nur teilweise vorhanden und weisen auch einen Helligkeitsgradienten auf, weil nur ein Teil der Lichtstrahlen aus dem Lichtaustritt 4 durch die Winkelbegrenzung auf ca. 42° die Reflexionsflächen 8, 8a überhaupt erreichen kann. Ein großer Vorteil dieser angrenzenden Spiegelflächen ist der nahtlose Übergang in der Lichtverteilung zwischen dem Abbild des Lichtaustritts und den gespiegelten Flächen 9, 9a. Die Kuppe 6 der Sammellinse 5 kann mit einer Streustruktur 7 überlagert sein, welche insgesamt eine leichte Streuwirkung und somit nicht nur eine Vergleichmäßigung der Lichtverteilung bewirkt, sondern auch einen Verlauf an den Rändern der Lichtverteilung erzeugt.

Die Auswahl des bestgeeigneten Querschnitts und der Anordnung der LED-Kristalle in der Lichtquelle selbst ist eine Frage der Rahmenbedingungen und der benötigten Lichtverteilung, sowie der Gestaltung der Optiken.

Ein frei festgelegter Querschnitt kann seine Berechtigung vor allem in seiner Austrittsgeometrie haben, wo zusammen mit der Sammellinse 5 eine besondere Lichtverteilung gefordert wird. So ist es etwa möglich, wie in Fig. 5 dargestellt, für den Lichtleiterquerschnitt eine Kreuz- oder Pfeilform oder ein anderes beliebiges Symbol zu wählen, welches dann durch die Sammellinse 5 auf einen Schirm oder ins unendliche projiziert wird, mit gleichmäßiger Helligkeit und beliebig veränderbarer gleichmäßiger Farbe. Gegenüber einer Lösung mit Abdeckmaske ist die direkte Erzeugung des leuchtenden Symbols verlustlos und entsprechend lichtstark.

Bei beliebig gestaltetem Lichtleiterquerschnitt ist auch zu untersuchen, ob die Vermischung der LED-Kristalle im Zentrum gegenüber Kristallen in Randbereichen unterschiedlich gut erfolgt. Gegebenenfalls muss ein längerer Lichtleiterstab 2 vorgesehen werden.

Anstelle der FullColor- oder Multi-LED können genauso einzelne kleine LED, etwa sogenannte Chip-LED, in dichter Anordnung vorgesehen sein. Hierbei können beliebige Einzelfarben kombiniert werden. Auch die Verwendung gleicher Farben ist möglich, um die Gesamthelligkeit zu vergrößern, aber auch um eine redundante Lichtquelle mit mehreren Kristallen, etwa für Sicherheitsaufgaben aufzubauen. Bei Ausfall einer LED oder Umschaltung auf die andere ist keine Änderung in der Lichtverteilung oder im Erscheinungsbild zu erkennen. Jedoch könnte bei Bedarf auch die Farbe nach Belieben gewechselt werden.

Die Lichtquelle der Optik kann selbstverständlich auch mit nur einem LED-Kristall bestückt sein. Hierdurch wird auch für eine einzelne Farbe dieselbe Lichtverteilung zu geringeren Kosten erzeugt, denn oft weisen Vollfarb-Anzeigetafeln angrenzend einfarbige Bereiche, etwa für Zusatztext auf.

Bei weißen LED wird oft bemängelt, dass im Zentrum bläuliches Licht vom blauen LED-Kristall, gegen den Rand zu aber gelbliches Licht von der Konversionsmasse abgestrahlt wird. Die erfindungsgemäße Optik mischt auch diese durch die LED-Konstruktion bedingten Farbunterschiede vollständig aus, denn die inhomogen leuchtende Fläche der weißen LED kann immer als Gesamtanordnung mehrerer LED-Kristalle mit unterschiedlichen Farben und Helligkeiten angesehen werden.

Die vorgestellte Erfindung kann natürlich auch in beliebigen anderen Anwendungen eingesetzt werden, beispielsweise können Optiken in dichter Anordnung als Bühnenscheinwerfer mit Farbwechsler Verwendung finden, oder als Spotlight im Bereich der Allgemein- oder Effektbeleuchtung, aber auch als Taschenlampen oder Signallichter. Die Optik ist dazu auch beliebig skalierbar, sodass leistungsstarke LED eingesetzt werden können, welche ebenso mit mehreren LED-Kristallen im gemeinsamen Gehäuse oder in Chip-on-Board-Bauweise mit ebener Austrittsfläche erhältlich sind.

## Patentansprüche

1. Farb- und lichtmischende Sammeloptik als vollfarbtaugliches Pixel für bildgebende Anzeigetafeln im Freien, für Spotlichter oder Signalisierung, bestehend aus einer LED-Lichtquelle, sowie einem davor angeordneten Lichtleiterstab und einer Sammellinse, wobei die LED-Lichtquelle (1) mehrere LED-Kristalle (R, G, B) enthält, die Lichteintrittsfläche (3) des Lichtleiterstabes (2) vor der Lichtaustrittsfläche der LED-Lichtquelle (1) angeordnet ist und Licht jedes LED-Kristalls einfängt, wobei sich der Lichtleiterstab (2) senkrecht zur Eintrittsfläche (3) erstreckt und wobei sein Querschnitt konstant ist oder allmählich zunimmt, **dadurch gekennzeichnet, dass** der Lichtaustritt (4) des Lichtleiterstabes (2) sich im Bereich des Fokus (F) der Sammellinse (5) befindet, dass diese das aus dem Mittelpunkt (F) austretende Licht achsparallel bündelt und das Licht, das seitlich des Mittelpunktes (F) des Lichtaustritts (4) aus einem Punkt (P) des Lichtaustritts (4) austritt, in einer zugehörigen Richtungen (p) parallel bündelt, dass die Mantelfläche des Lichtleiterstabes (2) aus optisch hochglanzpolierten Ebenen gebildet ist, welche scharfkantig aneinandergrenzen und somit jeder Querschnitt die Form eines Polygons aufweist, dass das Material des Lichtleiterstabs (2) frei von lichtstreuenden Komponenten ist, und dass der Lichtaustritt (4) des Lichtleiterstabes (2) in seinem Umriss bereits weitgehend der auf den Kopf gestellten benötigten Lichtverteilung entspricht und das durchtretende Licht durch die vorgeschaltete Sammellinse (5) nach dem optischen Projektionsgesetz in Form des aufrechten Umrisses abgestrahlt wird.

2. Sammeloptik nach Anspruch 1, **dadurch gekennzeichnet, dass** der Lichtleiterstab (2) eine Länge aufweist, die ein Vielfaches des Durchmessers der Eintrittsfläche (3) ist.

3. Sammeloptik nach Anspruch 1, **dadurch gekennzeichnet, dass** die LED-Kristalle unterschiedliche Farben abstrahlen.

4. Sammeloptik nach Anspruch 1, **dadurch gekennzeichnet, dass** die Lichtquelle (1) eine FullColor- oder Multi-LED mit einer Anzahl von Kristallen und/oder Farben in einem gemeinsamen Gehäuse ist.

5. Sammeloptik nach Anspruch 4, **dadurch gekennzeichnet, dass** die Lichtquelle (1) eine FullColor- oder Multi-LED mit drei Kristallen in den Grundfarben Rot, Grün und Blau ist.

6. Sammeloptik nach Anspruch 1, **dadurch gekennzeichnet, dass** die Lichtquelle (1) aus mehreren LED mit einzelnen Kristallen und gleicher Abstrahlungsrichtung in dichter Anordnung besteht.

7. Sammeloptik nach Anspruch 1, **dadurch gekennzeichnet, dass** die Lichtquelle (1) aus mehreren Kristallen auf einer gemeinsamen Leiterplatte in Chip-on-Board-Technik aufgebaut ist.

8. Sammeloptik nach Anspruch 1, **dadurch gekennzeichnet, dass** die LED-Kristalle an elektrisch getrennten Stromquellen betrieben werden und bei Störung eines Kreises der andere oder nächste LED-Kristall weiterleuchtet und hierdurch eine Ausfall-Sicherheit oder auch ein Farbwechsel in der Abstrahlung erzielt wird.

9. Sammeloptik nach Anspruch 1, **dadurch gekennzeichnet, dass** die Lichtquelle (1) durch Verwendung von Konversionsmaterial eine Lichtaustrittsfläche mit lückenloser Anordnung von LED-Kristallen, welche örtlich unterschiedliche Farb- und Helligkeitseigenschaften besitzen, aufweist.

10. Sammeloptik nach Anspruch 1, **dadurch gekennzeichnet, dass** der Lichtleiterquerschnitt ein gleichseitiges Dreieck oder regelmäßiges Sechseck, Quadrat oder Rechteck ist.

11. Sammeloptik nach einem der Ansprüche 1 oder 10, **dadurch gekennzeichnet, dass** der Lichtleiterquerschnitt die Gestalt eines Pfeiles, Kreuzes oder eines ähnlichen Symbols aufweist.

12. Sammeloptik nach einem der Ansprüche 1 bis 11, **dadurch gekennzeichnet, dass** der Sammellinse optische Strukturen nachgereiht sind, durch welche die Lichtverteilung verändert oder gestreut wird.

13. Sammeloptik nach Anspruch 12, **dadurch gekennzeichnet, dass** die optischen Strukturen (7) der Außenfläche (6) der Sammellinse (5) überlagert sind.

14. Sammeloptik nach zumindest einem der Ansprüche 1 bis 13, **dadurch gekennzeichnet, dass** der Lichtaustritt (4) des Lichtleiterstabes (2) nur virtuell vorhanden ist und der Lichtleiterstab (2) unmittelbar in die Sammellinse (5) übergeht.

15. Sammeloptik nach zumindest einem der Ansprüche 1 bis 14, **dadurch gekennzeichnet, dass** in Verlängerung des Lichtleiters (2) optisch wirksame Flächen (8, 8a) oder Oberflächenstrukturen (7) angrenzen, welche das austretende Licht durch Brechung oder Totalreflexion bündeln, ablenken oder streuen.

## Claims

1. A color- and light-mixing convergent optical system as a pixel capable of full color for imaging display boards outdoors, for spotlights or signaling, consisting of an LED light source, and also a light guide rod arranged in front thereof, and a convergent lens, the LED light source (1) contains a plurality of LED crystals (R, G, B), the light entrance surface (3) of the light guide rod (2) is arranged in front of the light exit surface of the LED light source (1) and captures light from each LED crystal, the light guide rod (2) extends perpendicularly to the entrance surface (3), and its cross section is constant or gradually increases, **characterized in that** the light exit (4) of the light guide rod (2) is situated in the region of the focus (F) of the convergent lens (5), which bundles the light emitted from the center point (F) parallel to the axis and the light emitted from a point (P) sideways from the center point (F) on the light exit (4) parallel into a corresponding direction (p), **in that** the generated surface of light guide rod (2) consists of optically smoothly polished with a mirror finish planes, which adjoin one another in a sharp-edged fashion and, consequently, each cross section has the form of a polygon and its material is free of light-scattering components and **in that** the light exit (4) of the light guide rod (2) in terms of its contour already largely corresponds to the required light distribution turned upside-down and the light passing through is emitted by the convergent lens (5) disposed ahead, according to the optical projection law, in the form of the upright contour.

2. The convergent optical system as claimed in claim 1, **characterized in that** the light guide rod (2) has a length which is a multiple of the diameter of the entrance surface (3).

3. The convergent optical system as claimed in claim 1, **characterized in that** the LED crystals emit different colors.

4. The convergent optical system as claimed in claim 1, **characterized in that** the light source (1) is a full-color LED or multi-LED having a number of crystals and/or colors in a common housing.

5. The convergent optical system as claimed in claim 4, **characterized in that** the light source (1) is a full-color LED or multi-LED having three crystals in the primary colors red, green and blue.

6. The convergent optical system as claimed in claim 1, **characterized in that** the light source (1) consists of a plurality of LEDs having individual crystals and the same emission direction in a dense arrangement.

7. The convergent optical system as claimed in claim 1, **characterized in that** the light source (1) is constructed from a plurality of crystals on a common printed circuit board using chip-on-board technology.

8. The convergent optical system as claimed in claim 1, **characterized in that** the LED crystals are operated from electrically isolated power sources and, upon disturbance of a circuit, the other or next LED crystal continues to be luminous and a fail-safety or else a color change in the emission is thereby obtained.

9. The convergent optical system as claimed in claim 1, **characterized in that** the light source (1), through the use of conversion material, has a light exit surface with an uninterrupted arrangement of LED crystals which have locally different color and brightness properties.

10. The convergent optical system as claimed in claim 1, **characterized in that** the light guide cross section is an equilateral triangle or regular hexagon, square or rectangle.

11. The convergent optical system as claimed in any of claims 1 or 10, **characterized in that** the light guide cross section has the shape of an arrow, cross or a similar symbol.

12. The convergent optical system as claimed in any of claims 1 to 11, **characterized in that** optical structures are placed downstream of the convergent lens and change or scatter the light distribution.

13. The convergent optical system as claimed in claim 12, **characterized in that** the optical structures (7) are superimposed on the outer surface (6) of the convergent lens (5).

14. The convergent optical system as claimed in at least one of claims 1 to 13, **characterized in that** the light exit (4) of the light guide rod (2) is only virtually present and the light guide rod (2) merges directly into the convergent lens (5).

15. The convergent optical system as claimed in at least one of claims 1 to 14, **characterized in that** optically active surfaces (8, 8a) or surface structures (7) adjoin in extension of the light guide (2) and focus, deflect or scatter the emerging light by refraction or total reflection.

## Revendications

1. Système optique convergent mélangeant les couleurs et la lumière en tant que pixel entièrement adapté aux couleurs, destiné à des panneaux d'affichage générateurs d'images en plein air, à des éclairages à spots ou des systèmes de signalisation, constitué d'une source lumineuse à LED et d'une tige guide de lumière placée devant, ainsi que d'une lentille convergente, dans lequel la source lumineuse à LED (1) comporte plusieurs cristaux LED (R, G, B) et la surface d'entrée de la lumière (3) de la tige guide de lumière (2) est placée devant la surface de sortie de la lumière de la source lumineuse à LED (1) et capte la lumière de chaque cristal LED, la source lumineuse à LED (1) s'étendant perpendiculairement à la surface d'entrée (3) et sa section transversale étant constante ou augmentant de manière progressive, **caractérisé en ce que** la sortie de lumière (4) de la tige guide de lumière (2) se situe dans la région du foyer (F) de la lentille convergente (5), **en ce que** celle-ci focalise, parallèlement à l'axe, la lumière sortant du centre (F) et focalise, de façon parallèle dans une direction (p) associée, la lumière sortant sur le côté du centre (F) de la sortie de lumière (4), en un point (P) de la sortie de lumière (4), **en ce que** la surface enveloppe de la tige guide de lumière (2) est constituée de plans à poli miroir optique se jouxtant avec des arêtes vives, donnant ainsi la forme d'un polygone à chaque section transversale, **en ce que** le matériau de la tige guide de lumière (2) est exempt de composants dispersant la lumière, et **en ce que** le contour de la sortie de lumière (4) de la tige guide de lumière (2) correspond déjà dans une large mesure à la répartition lumineuse inversée nécessaire, et la lumière qui passe est émise par la lentille convergente (5) placée en amont, sous la forme du contour redressé, conformément à la loi de projection optique.

2. Système optique convergent selon la revendication 1, **caractérisé en ce que** la tige guide de lumière (2) présente une longueur qui correspond à un multiple du diamètre de la surface d'entrée (3).

3. Système optique convergent selon la revendication 1, **caractérisé en ce que** les cristaux LED émettent des couleurs différentes.

4. Système optique convergent selon la revendication 1, **caractérisé en ce que** la source lumineuse (1) est une LED de type Full Color ou multiple, avec un certain nombre de cristaux et/ou de couleurs dans un boîtier commun.

5. Système optique convergent selon la revendication 4, **caractérisé en ce que** la source lumineuse (1) est une LED de type Full Color ou multiple, avec trois cristaux dans les couleurs primaires rouge, vert et bleu.

6. Système optique convergent selon la revendication 1, **caractérisé en ce que** la source lumineuse (1) se compose de plusieurs LED à cristaux individuels et à direction d'émission identique, dans une disposition compacte.

7. Système optique convergent selon la revendication 1, **caractérisé en ce que** la source lumineuse (1) est constituée de plusieurs cristaux disposés sur une carte de circuit imprimé commune à technologie puce sur carte.

8. Système optique convergent selon la revendication 1, **caractérisé en ce que** les cristaux LED fonctionnent avec des sources de courant séparées sur le plan électrique et qu'en cas de perturbation d'un circuit, l'autre cristal LED ou le cristal LED suivant continue d'émettre de la lumière, permettant d'obtenir ainsi une sûreté intégrée ou bien un changement de couleur dans l'émission.

9. Système optique convergent selon la revendication 1, **caractérisé en ce que** la source lumineuse (1), du fait de l'utilisation de matériaux de conversion, présente une surface de sortie de la lumière ayant une disposition sans interstices de cristaux LED qui possèdent des propriétés de couleur et de luminosité localement différentes.

10. Système optique convergent selon la revendication 1, **caractérisé en ce que** la section de l'élément de fibres optiques est un triangle équilatéral ou un hexagone régulier, un carré ou un rectangle.

11. Système optique convergent selon l'une des revendications 1 ou 10, **caractérisé en ce que** la section de l'élément de fibres optiques présente la forme d'une flèche, d'une croix ou d'un symbole similaire.

12. Système optique convergent selon l'une des revendications 1 à 11, **caractérisé en ce que**, à la suite de la lentille convergente, sont disposées des structures optiques qui modifient ou dispersent la répartition de la lumière.

13. Système optique convergent selon la revendication 12, **caractérisé en ce que** les structures optiques (7) sont superposées à la surface extérieure (6) de la lentille convergente (5).

14. Système optique convergent selon au moins l'une des revendications 1 à 13, **caractérisé en ce que** la sortie de lumière de la tige guide de lumière (2) n'existe que sur le plan virtuel et que la tige guide de lumière (2) se raccorde directement à la lentille convergente (5).

15. Système optique convergent selon au moins l'une des revendications 1 à 14, **caractérisé en ce que** dans le prolongement de l'élément de fibres optiques (2), des surfaces (8, 8a) ou des structures de surfaces (7) à action optique sont adjacentes, qui focalisent, dévient ou dispersent la lumière sortante, par réfraction ou réflexion totale.
